(19) Europäisches Patentamt
European Patent Office
Office européen des brevets

(11) Publication number: 0 175 484 A2

# (12) EUROPEAN PATENT APPLICATION

(21) Application number: 85305890.7

(22) Date of filing: 19.08.85

(51) Int. Cl.4: C08J 5/06, D01F 11/10, C08L 79/08

(30) Priority: 20.08.84 US 642523

(43) Date of publication of application: 26.03.86 Bulletin 86/13

(84) Designated Contracting States: AT BE CH DE FR GB IT LI LU NL SE

(71) Applicant: AMOCO CORPORATION
200 East Randolph Drive
Chicago Illinois 60601(US)

(72) Inventor: Cole, Bill Wayne
1112 Hidden Spring Drive
Naperville Illinois(US)
Inventor: Hanson, Robert Burton
303 Orchard
Oswego Illinois 60543(US)

(74) Representative: Cropp, John Anthony David et al
MATHYS & SQUIRE 10 Fleet Street
London, EC4Y 1AY(GB)

## (54) Sized fibres.

(57) Thermally stable fibres, especially carbon or graphite fibres, which have been sized with an amide-imide polymer preferably an amide-imide polymer in which the repeating units comprise a mixture of amide-amic acid units and imide units or a mixture of amide-amic acid units and amide units. The use of such sized fibres in the production of fibre reinforced amide-imide resin composites reduces the generation of volatiles during the formation of the composites and provides improved fibre-matrix adhesion.

EP 0 175 484 A2

Field of the Invention

The field of the invention relates to reinforcing fibers coated on the surface with a sizing agent of polyamide amic acid, an amide-imide polymer, an amide-imide copolymer or mixtures of these materials (hereinafter collectively referred to as amide-imide polymers). The coated fibers are employed to prepare composites with amide-imide polymers as the matrix resin. The resulting composite has excellent toughness properties and enhanced thermal properties for extended use at temperatures in excess of 450°F.

Background

Carbon fiber composites wherein carbon fibers are included in a synthetic resin matrix are well known in the art as in the use of other reinforcing fibers. The function of the resin matrix is primarily to give the composite the required external dimension and shape, while the reinforcing fibers provide the composite with the required strength and stiffness.

Improved bonding between, for example, carbon fibers and matrix resins in general has been accomplished in the past by a number of techniques such as by plating the carbon fibers with various metals including tantalum, metal carbides and nitrates, and by etching the surface of the carbon fibers with oxidizing agents such as air, ozone, concentrated nitric acid and chromic-sulfuric acid. Block and graft copolymers have also been used to improve bonding between the carbon fibers and the matrix all illustrated by U.S. Pat. No. 3,855,174. Carbon fibers have also been coated with a variety of sizing agents such as epoxy resins for a number of reasons, such as to prevent snagging and fraying of the carbon fibers as illustrated by U.S. Pat. Nos. 3,373,984; 3,806,489; 3,908,042; 3,914,504; 3,953,641; 3,971,669; 4,145,472 and British Patent Specification No. 1,195,219. U.S. Pat. No. 4,364,993 uses a polyisocyanate or a sorbitol polyglycidyl ether as sizing agents for carbon fibers.

Amide-imide polymers and copolymers are a relatively new class of organic compounds known for their solubility in nitrogen-containing organic solvents when in the largely polyamide form. In the past, the major application of these amide-imide polymers has been as wire enamels. This is illustrated in U.S. Patents 3,661,832 (1972), 3,494,890 (1970) and 3,347,828 (1967). Amide-imide polymers and copolymers have also been found useful for molding applications as shown in U.S. Patents 4,016,140 (1977) and 3,573,260 (1971). U.S. 4,136,085 (1979), U.S. 4,313,868 (1982), and U.S. 4,309,528 (1982) are incorporated herein by reference. These polyamide-imides are known for their outstanding mechanical properties. The art has been looking for fiber reinforced composite structures which can be formed into various kinds of articles by using conventional molding techniques such as a press molding technique, vacuum bag autoclave molding technique, and the like.

When reinforcing fibers sized with agents such as epoxy or polyimide are used with high temperature materials such as amide-imide polymers, these sizing agents volatilize or decompose at amide-imide processing temperatures to form volatiles which cause voide in the final composite structure. Additionally, these sizing agents do not provide acceptable binding between the fiber and the amide-imide polymer matrix.

Accordingly, there is a need for sizing agents for reinforcing fibers, said agents having sufficient thermal stability to withstand processing temperatures for amide-imide polymers and provide improved binding between the fiber and the amide-imide polymer matrix.

It is therefore an object of the present invention to improve the bond between the reinforcing fiber surfaces and certain amide-imide polymers employed as the resin matrix.

It is another object of the present invention to provide reinforcing fibers coated with a sizing agent which can be employed in combination with certain amide-imide polymer matrix resins to prepare fiber reinforced composites which exhibit improved matrix dominated properties such as fracture toughness, interlaminar shear strength and transverse tensile strength. The amide-imide matrix resin also permits excellent translation of fiber properties resulting in high flexural, tensile, and compression strengths.

It has been found that the particular sizing agents described herein improve the adhesion of the carbon fiber surface with the amide-imide polymers employed as the matrix component of a composite structure. These sizing agent also do not generate volatiles during the formations of amide-imide polymer composites and therefore minimize the problem of void formation present with known sizing agents.

These and other objects and features of the invention will become apparent from the claims and from the following summary and description of the preferred embodiments of the present invention.

Description of the Preferred Embodiments

We have now found that polyamide amic acids, amide-imide polymers and copolymers and mixtures thereof, herein collectively referred to as amide-imide polymers, obtained by reacting a polycarboxylic acid anhydride with one primary diamine or a mixture of primary diamines produce excellent sizing for reinforcing fibers. Suitable polyamide amic acids for use as sizing resins for reinforcing fibers comprise recurring polyamide amic acid A units of:

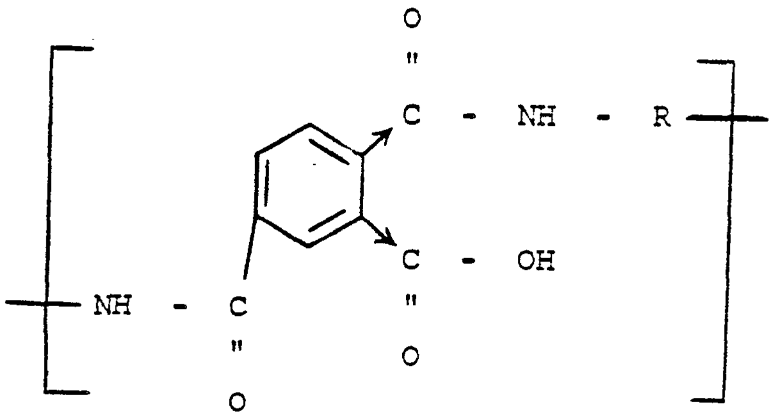

wherein → denotes isomerism and R is a divalent, wholly-or largely-aromatic hydrocarbon radical of from about 6 to about 10 carbon atoms, or two divalent aromatic hydrocarbon radicals each of from 6 to about 10 carbon atoms joined directly or by stable linkages such as -O-, methylene, -CO-, $-SO_2-$, -S-; for example, R'-O-R'-, $-R'-CH_2-R'-$, -R'-CO-R'-, $-R'-SO_2-R'-$ and -R'-S-R'-. Additionally, R can be a mixture of two or more such radicals to provide a copolymer, terpolymer, etc.

These polyamide amic acid units are capable of undergoing imidization ordinarily upon heating to produce polyamide-imides of the following B units:

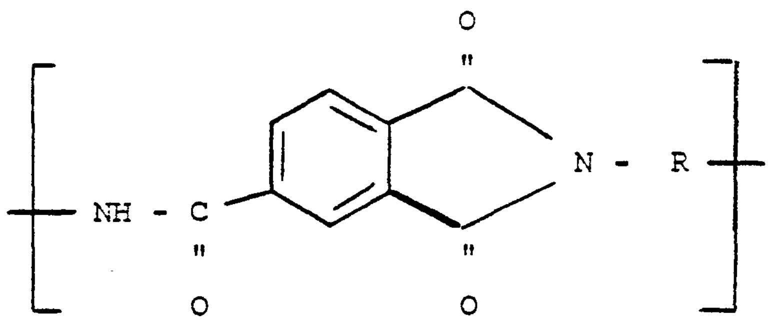

These materials have a weight average molecular weight from about 3,000 to about 13,000.

The amide-imide polymers are prepared from trimellitic anhydride and a mixture of wholly- or partially-aromatic primary diamines or fully or partially acylated diamines. The process using acylated diamines is disclosed in U.S. Patent 4,309,528 incorporated herein by reference. Usefully, the trimellitic anhydride is an acyl halide derivative of the anhydride of trimellitic acide. Preferably, the anhydride is the acyl chloride derivative of trimellitic acid anhydride (4-TMAC).

Useful aromatic diamines include para- and meta-phenylenediamine, oxybis (aniline), thiobis (aniline), sulfonylbis (aniline), diaminobenzophenone, methylenebis (aniline), benzidine, 1,5-diaminonaphthalene, oxybis (2-methylaniline), thiobis (2-methylaniline), 2,2-bis[4-(p-aminophenoxy)phenyl] propane, bis[4-(p-aminophenoxy)phenyl] sulfone, 2,2-bis[4-(p-aminophenoxy)phenyl] hexafluoro propane, bis[4-(p-aminophenoxy)] benzene, bis[4-(3-aminophenoxy)] benzene, and the like. Examples of other useful aromatic primary diamines are set out in U.S. Patent No. 3,494,890 (1970) and U.S. Patent No. 4,016,140 (1977) both incorporated herein by reference. The preferred diamine is metaphenylenediamine.

Our polyamide-imides and polyamide amic acids are prepared by reacting the acyl chloride derivative of trimellitic acid anhydride with two or more of a mixture of largely- or wholly-aromatic primary diamines. The resulting products are polyamides wherein the linking groups are predominantly amide groups, although some may be imide groups, and wherein the structure contains free carboxylic acid groups which are capable of further reaction. Typical polymers of this invention have up to about 50 percent imidization prior to hear treatment, typically about 10 to about 40 percent.

Preferably, the mixture of aromatic primary diamines is composed of meta-phenylenediamine, p,p'-oxybis(aniline) and meta- phenylenediamine, or p,p'-sulfonylbis(aniline) and p,p'-methylenebis(aniline). More preferably, the mixture of primary aromatic diamines contains meta -phenylenediamine and p,p'-oxybis(aniline). Most preferably, the molar ratio of p,p'-oxybis(aniline) to meta-phenylenediamine is from about 50:50 to about 90:10. In the homopolymer system, the preferred diamines are oxybis(aniline) or meta-phenylenediamine. The aromatic nature of the diamines provides the excellent thermal properties of the homopolymer copolymers while the primary amine groups permit the desired imide rings and amide linkages to be formed.

Also useful for coating the reinforcing fibers are compositions of the foregoing amide-imide polymers wherein between about 20 to 80 percent of imide-containing moieties are replaced by the following composition:

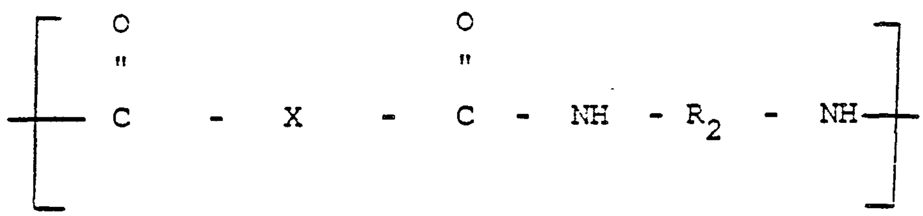

wherein $R_2$ is the same as R and X is a divalent aromatic radical. The preferred composition for X is:

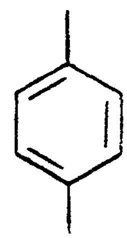

or

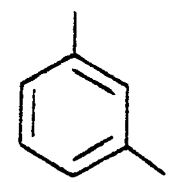

or a mixture of these.

Usually, the polymerization is carried out in the presence of a nitrogen-containing organic polar solvent, such as N-methylpyrrolidone, N,N-dimethylformamide and N,N-dimethylacetamide. The reaction should be carried out under substantially anhydrous conditions and at a temperature below about 150°C. Most advantageously, the reaction is carried out from about 20°C to about 50°C.

The reaction time is not critical and depends primarily on the reaction temperature. It may vary from about 1 to about 24 hours, with about 2 to 4 hours at about 30°C to about 50°C preferred for the nitrogen-containing solvents.

Any fiber material that has a modulus of 10,000,000 psi or greater and is thermally stable to at least 600°F for at least 10 minutes can be advantageously used with the sizing of the present invention. The term "thermally stable" means the fiber does not emit sufficient volatiles to cause voids in the final composite structure. Such thermally stable fiber materials as glass fiber, alumina, silica nitride, silicon carbide, boron, Kevlar fiber, graphite, or carbon fiber are useful. Carbon fibers are especially preferred.

The term "carbon fiber" is used herein in the generic sense and includes graphite fibers as well as amorphous carbon fibers which result after a thermal carbonization or graphitization treatment. Graphite fibers are defined herein to consist substantially of carbon and have a predominant X-ray diffraction pattern characteristic of graphite. Amorphous carbon fibers, on the other hand, are defined as fibers in which the bulk of the fiber weight can be attributed to carbon and which exhibit a predominantly amorphous X-ray diffraction pattern. Graphite fibers generally have a higher Young's modulus than do amorphous carbon fibers and in addition are more highly electrically and thermally conductive.

Carbon fibers which typically are employed in preparing the composites described herein contain at least about 90 percent carbon by weight. In a preferred embodiment, the carbon fibers contain at least about 95 percent carbon by weight and exhibit a predominantly graphitic X-ray diffraction pattern.

Reinforcing fibers are generally employed in the configuration of a ribbon or tape which may comprise a single flat tow of continuous carbon filaments or a plurality of substantially parallel multifilament fiber bundles which are substantially coextensive with the length of the ribbon.

In the latter embodiment, the fiber bundles of the ribbon may be provided in a variety of physical configurations. For instance, the bundles of the ribbon may assume the configuration of continuous lengths of multifilament yards, tows, strands, cables, or similar fibrous assemblages. The multifilament bundles are preferably lengths of a continuous multifilament yarn. The fiber bundles within the ribbon optionally may be provided with a twist which tends to improve their handling characteristics. For instance, a twist of about 0.1 to 5 tpi, and preferably about 0.3 to 1.0 tpi, may be imparted to each fiber bundle. Also, a false twist may be used instead of or in addition to a real twist. Alternatively, the fiber bundles may possess substantially no twist.

Multifilament fiber bundles may be provided within the ribbon in a substantially parallel manner in the substantial absence of bundle crossovers to produce a flat ribbon. The number of parallel multifilament bundles present within, for example, the carbon fiber ribbon may be varied widely, e.g., from 6 to 1,000 or more. In one embodiment, a ribbon is selected having a weft pick interlaced with substantially parallel fiber bundles in accordance with the teachings of commonly assigned U.S. Pat. No. 3,818,082, which is herein incorporated by reference. It is not essential, however, that the parallel fiber bundles or the filaments of a flat tow be bound by any form of weft interlacement when constructing fiber tapes for resin impregnation in accordance with the procedures described herein.

The sizing agent can be applied to individual fibers or to multiple fibers in the form of bundles, ribbons, tapes or fabrics and the like. The sizing compositions can be applied to the fibers by known methods, for example, by drawing the fibers through a bath containing the molten size or the size in solution or by spraying the size onto the fibers and then drying the fibers to remove substantially all the solvent. A suitable apparatus for coating the carbon fibers with the sizing agent is illustrated in U.S. Pat. No. 3,914,504, which is incorporated herein by reference.

It is preferred that the sizing agent be applied by passing the fiber through a bath containing a solution of the agent in a suitable solvent. This method allows the amount of size coated onto the fiber to be readily controlled. The presence of solvent will improve the ability of the sizing agent to penetrate into the individual fibers of a staple yarn, filament yarn, tape, fabric or roving. The concentration of the size in the solvent is usually in the range of from about 0.05 to about 10 percent, and preferably from about 0.5 to about 5 percent by weight, based on the total weight of the solution.

The solvent used should be capable of dissolving sufficient quantities of the sizing agent to allow efficient coating of the fiber and also be nonreactive with the sizing agent. Examples of suitable solvents are N-methylpyrrolidone (NMP), N,N-dimethylformamide (DMF), methyl ethyl ketone (MEK), and N,N-dimethylacetamide (DMAC). Other materials to aid in the removal of the solvent, such as methylene chloride and the like, can be added to the solvent.

The amount of sizing agent on the fiber will depend on the configuration of the fiber during application, i.e., whether the fiber is in the form of a bundle, fabric or the like. For a continuous fiber or filament, the amount of sizing agent or coating will ordinarily range from about 0.05 to about 1.5 percent by weight based on the fiber. For a unitape (number of fibers parallel to one another), the amount of sizing agent or coating will ordinarily range form about 0.05 to about 1 percent by weight based on the unitape. For a chopped or staple fiber, the amount of sizing agent or coating will ordinarily be less than about 6 percent by weight based on the fiber. A treated fabric will ordinarily contain an amount of sizing agent or coating from about 0.2 to about 1.8 percent by weight based on the fabric.

Typically, a fiber strand or ribbon is passed into a solution containing the sizing agent and then into a heated tube to remove the solvent and dry the fiber. The tube is heated by hot air. Continuous fiber for woven fabric must be sized for the weaving process. Commercial products are most often available with size materials, which are not compatible with amide-imide polymer matrix resins. For example, carbon fiber commonly is sized with an epoxy size material. One commercial product is available with a polyimide (PI) size which is also not compatible with amide-imide polymer matrix resins. Both the epoxy and the PI size materials emit volatiles at process temperatures as high as 700°F which are used for amide-imide polymer matrix resins.

Solvent wash and heat cleaning can be used, for example, for removal of epoxy and polyimide size from carbon fiber woven fabrics, and laminate properties are significantly improved after the size material is removed. Optimum properties, however, have been achieved by using unsized carbon fiber, applying an amide-imide polymer, weaving the sized fiber into a fabric, and impregnating the resulting fabric with amide-imide polymer matrix resins to form a prepreg for molding.

The sized individual fibers or multiple fibers can be woven into fabric using a loom, twisted to form yarns, chopped into staple fibers and the like. When woven into fabrics the fibers can be combined with other materials, such as glass fiber, to form unidirectional fabric.

The fibers coated with sizing agent described herein are primarily intended to be used in fiber reinforced composite structures. The term "composite structure" refers to a heterogeneous assembly comprised of two or more components, at least one of which defines a continuous phase which is hereinafter designated as the "matrix" component, and at least one other component defining reinforcing means or reinforcement for the said composite assembly, the reinforcing means being contiguous to and firmly bonded to the matrix component. For example, the respective components of such composite assemblies can be either coated, layered, stratified and/or laminated and the like.

Thus, the composite structures of the present invention comprise the amide-imide polymer matrix component, and the reinforcing material which comprises reinforcing fibers and the sizing agent described herein for the fibers.

The composite fabrication technique may be selected from any of those procedures previously employed in the advanced engineering composite art. Typically, a composite structure is formed by impregnating individual lamina (e.g., fiber layers, ribbons, plies, etc.) of sized fibers arranged in the desired configuration with the amide-imide polymer to form a prepreg. The impregnation of the lamina may be conducted by applying the amide-imide polymer to the same from a melt or preferably from a solution. The dry impregnated lamina are then stacked as needed and molded with conventional molding techniques.

The composite structures will generally constitute from about 50 to about 70%, and preferably from about 55 to about 65%, by weight, sized fibers and correspondingly from about 50 to about 30%, and preferably from about 45 to about 35%, by weight, amide-imide polymer matrix based on the weight of the composite.

These composite structures find utility in the military aircraft industry where the composite structures must have good toughness and be able to withstand extended use at temperatures in excess of 350°F in a humid atmosphere. Additional less demanding applications are found in commercial aircraft and automotive industries.

The following examples illustrate the preferred embodiment of the invention. It will be understood that the examples are for illustrative purposes only and do not purport to be wholly definitive with respect to conditions or scope of the invention.

## EXAMPLE 1

A 200-ml, round-bottom, 4-neck flask, equipped with a nitrogen inlet tube, stirrer, thermometer, and solids addition funnel, was charged with 99.9 parts by weight (pbw) of p,p'-oxybis(aniline) (OBA), 23.1 pbw metaphenylenediamine (MPDA) and 604 pbw N-methylpyrrolidone (NMP). When solution at room temperature (72°F) was complete, 141.75 pbw 4-trimellitoyl anhydride chloride (4-TMAC), having a purity of 99.5 percent ± 0.5 percent as determined from chloride content and 7.5 pbw of trimellitic acid anhydride (TMA) were added over 2.5 hours while maintaining a solution temperature of between 77-95°F. When addition was complete, the solution was stirred for 3 hours during which time the solution viscosity increased to a Gardner-Holdt value of 25+ or about 110 poises.

Solid polymer was obtained by first pouring the viscous solution into twice its volume of distilled water in a Waring blender and then filtering. The filtrate was washed with 5 increments each of 3000 pbw of distilled water to remove hydrogen chloride that had been generated during reaction.

The solid was dried under a vacuum of 20 inches of mercury for 24 hours at 122°F. A 2-gram sample heated for 20 min. at 500°F in an air-circulating oven showed a volatiles content of 10%.

EXAMPLE 2

A 200-ml, round-bottom, 4-nech flask, equipped with a nitrogen inlet tube, stirrer, thermometer, and solids addition funnel, were charged with 99.9 parts by weight (pbw) of OBA, 23.1 pbw of MPDA and 604 pbw of NMP. When solution at room temperature (72°F) was complete, 144.0 pbw 4-TMAC, having a purity of 99.5 percent ± 0.5 percent as determined from chloride content and 5.5 pbw of TMA were added over 2.5 hours while maintaining a solution temperature of between 77-95°F. When addition was complete, the solution was stirred for 3 hours during which time the solution viscosity increased to a Gardner-Holdt value of 25+ or about 110 poises.

Solid polymer was obtained by first pouring the viscous solution into twice its volume of distilled water in a Waring blender and then filtering. The filtrate was washed with 5 increments each of 3000 pbw of distilled water to remove hydrogen chloride that had been generated during reaction.

The solid was dried under a vacuum of 20 inches of mercury for 24 hours at 122°F. A 2-gram sample heated for 20 min. at 500°F in an air-circulating oven showed a volatiles content of 10%.

A 2000-ml, round-bottom, 4-neck flask, equipped with a nitrogen inlet tube, stirrer, thermometer, and solids addition funnel was charged with 1000 pbw of NMP. After bringing the flask contents to 50-60°C, 598 pbw of the solid prepared were added with stirring. Solution was effected after stirring for 2-3 hrs at 50-60°C. After cooling to 25°C, the viscosity was 158 poises with a determined solids content of 37.8% (Sample of 2 g heated for 2 hrs at 200°C).

EXAMPLE 3

A sample of polymer as prepared by the method of Example 1 was heated for 2 hours in an oven dryer with a temperature range of 375-450°F.

EXAMPLE 4

A 690-gram portion of dimethylacetamide was stirred and cooled to 5°C with dry nitrogen purging to keep the system dry. An intimate mixture composed of 252.2 grams of 4-TMAC, 119.0 grams of p',p-methylene-bis(aniline)(MBA), and 120.0 grams of p,p'-oxybis(aniline) was then added to the solvent over a period of 30 minutes. The temperature of the reaction was allowed to rise to 50°C. At that temperature it was controlled by means of an ice bath. An additional 100 grams of DMAC were then added to wash in all solids and the reaction continued for another 3-1/2 hours at 50°C. The reaction solution was then poured into a large excess of rapidly-agitated water, whereupon precipitation of the copolymer took place. The solids were then washed several times with distilled water and soaked overnight. Finally, the solids were dried at 120°F. A 443-grm yield of the copolymer was obtained.

EXAMPLE 5

A solution consisting of 533.3 grams of NMP, 300 grams of DMAC, and 58.0 grams of propylene oxide was stirred and cooled to 8°C. A mixture of 168.5 grams of 4-TMAC, 80.1 grams of OBA, and 79.3 grams of MBA was then added to the solvent over a period of 50 minutes. During this time the reaction was allowed to warm to 36°C. An additional 66.7 grams of NMP were added to wash in all solids, then the reaction mixture was heated to 50°C and held at that temperature for 3-1/2 hours. The solution was then filtered.

EXAMPLE 6

The general procedure for preparing a copolymer containing three diamines is illustrated by the reaction of OBA, MPDA and MBA and 4-TMAC in DMAC. Thus, a 242.0-gram portion of OBA (1.21 moles), a 130.7-gram portion of MPDA (1.21 moles) and a 239.6-gram portion of MBA (1.21 moles) were dissolved in 3900 grams DMAC contained in a 6-liter flask equipped with a nitrogen purge, stirrer, addition funnel and thermometer. A 765-gram portion of 4-TMAC (3.63 moles) in flake or lump form was then added to the solution in portions over 90 minutes. The reaction exo-therm was allowed to raise the temperature to about 35°C. The reaction temperature was maintained at 33°-38°C for the remainder of the 4-TMAC addition using cooling water when necessary. After the 4-TMAC addition was completed, any residual 4-TMAC clinging to the addition funnel was completely washed into the reaction solution with 70 grams DMAC. A heating mantle was applied to the reaction flask and the temperature quickly raised (about 20 min.) to 50°C. The reaction solution was stirred at 50°C for 90 minutes and then the solution was precipitated by admixing with water. Prior to precipitation, the solution viscosity was about 7.5 strokes (25°C, 20 percent solids). The polymer was precipitated in distilled water in a model D, W. J. Fitzpatrick Company, comminuting machine (Fitz mill). After precipitation the polymer was washed with distilled water to aqueous pH 4 to 5 (3 to 4 hours washing time), then filtered onto large Buchner funnels. The polymer was dried overnight by drawing air through the funnels, then finally dried in an aeromat drier at 30°-35°C for 12-15 hours.

EXAMPLE 7

A 10 gal., glass-lined Pfaudler kettle equipped with a water-cooled jacket and nitrogen inlet was charged with 9.87 lbs. of MPDA, 0.35 lbs. of TMA and 59.2 lbs. of NMP. After solution had occurred under a nitrogen purge. an intimate blend of 9.52 lbs. of 4-TMAC and 9.17 lbs. of isophthaloyl dichloride ($IPCL_2$) was added over 2.5 hrs. keeping the temperature below 35°C. The resulting viscous solution was brought to 50°C. When the Gardner viscosity had reached a Z1 viscosity, the solution was precipitated by passage through a Fitzpatrick comminuting mill. The polymer product was washed five times with dionized water followed by air-drying on a filter for 3 days. The product was then brought to a solids content of >98% by heating in a forced air oven for 2 hrs. at 470°F.

EXAMPLE 8

A round-bottom, 2000-ml, 4-neck flask was charged with 1045 g dry NMP, 162.1 g of MPDA, and 4.3 g of TMA. The flask was equipped with a mechanical stirrer, nitrogen inlet tube, thermometer, and a liquid addition funnel. During solution of the diamine and TMA, the addition funnel was charged with 248.0 g of 4-TMAC and 60.9 g of $IPCL_2$ and melted at 80°C. When melting was complete, the solution of acid chlorides was added to the diamine TMA solution over a 2-hour period at 25°-35°C. After addition was complete, the viscous solution was heated to 50°C and held for 1 hour.

EXAMPLE 9

Continuous carbon fiber prepreg in a polyamide amic acid matrix was prepared where the polymer was prepared according to Example 1.

Laminates of polyamide amic acid solution-impregnated graphite fiber woven fabric have been produced at lower molding pressures when only polyamide amic acid is used compared to polyamide-imide impregnated fabric.

The solution was used to coat 26" X 42" pieces of graphite fiber woven fabric. The fabric was woven from Thornel 300 fiber into an 8 harness satin weave weighing 370 g/m$^2$. Both solution and fabric were preweighed to yield 39 percent dry resin content coated fabric after solvent extraction. The fabric was taped to polyethylene film and the solution was worked into the fabric with a propylene squeegee. The coated fabric was dried at ambient temperature until tack free, then stripped from the polyethylene backing and oven dried at 300°F for 16 hrs. After drying, the fabric was cut to the desired dimensions and loaded in a mold preheated to 650°F. The mold was partially closed on .250 inch shims for 5 minutes to allow additional devolatilization while the material and the mold were heated to the 650°F mold temperature. Full pressure was applied for 5 minutes followed by a double bump (partial opening of mold) to allow venting of entrapped volatile matter. The laminates were then cooled to 350°F for demolding.

Polyamide amic acid is the intermediate product obtained in the amide-imide manufacturing process prior to the imidization step. Evaluation of polyamide amic acid prepared according to Example 1 in NMP solution indicates desirable characteristics when used as an impregnating resin for carbon fabrics. With the heat history provided by the drying and the molding processes, however, amic acid matrix resin is converted to amide-imide polymer. Laminates prepared with the solution have good laminate properties. The intermediate product prepared as shown in Example 1 has approximately one-tenth of the polyamide-imide solution viscosities which permits the use of higher concentrations in the impregnation solution. Higher concentrations result in better distribution of polymer in the fiber strand. Higher concentrations also minimize shrinkage and other problems associated with eliminating the NMP solvent in drying.

Laminates are fabricated by stacking layers of dry impregnated fabric in a hot platen press. As compared to polyamide-imide solution laminates, polyamide amic acid solution matrix has proven to have lower apparent melt viscosity as evidenced by improved resin fill on the laminate surface, increased squeeze out on unsupported edges and improved laminate quality at molding pressures as low as 150 psi. The reduced melt viscosity is a result of having reduced molecular weight in the polymer.

The glass transition temperature (Tg) of the powders of the polyamide amic acid from Example 1 and the imidized product therefrom were determined by differential scanning calorimetry (DSC) at 469°F and 485°F, respectively. Laminates were molded from fabrics impregnated with solutions of both powders. The laminates were cut into short beam shear bars and the bars were pulled after each stage of the post cure to monitor the increase in Tg and shear strength. The results shown in Table 1 indicate that the increase in Tg for the amic acid material does lag behind that of the fully imidized amide-imide material initially, but at the end of the seven day cure the two materials have similar glass transition temperatures. The results also indicate that the shear strength of the amic acid laminate was greater than that of the fully imidized amide-imide polymer laminate throughout. This unexpected superiority in strength has been observed in other experiments.

Polyamide amic acid has distinct processability and property advantages over the fully cured amide-imide polymer when used as a matrix material in continuous fiber composites. The flexural modulus and flexural strength values were determined by ASTM D-790 test procedure. The short beam shear (SBS) value was determined by the ASTM D-2344 test procedure.

TABLE I EFFECT OF POST-CURE ON GLASS TRANSITION TEMPERATURE, RESIDUAL NMP LEVEL AND SHEAR STRENGTH OF GRAPHITE[1]/POLYAMIDE-IMIDE LAMINATES

| Cumul. Days in Cure | Cure Temp. (°F) | Amic Acid Prepared As Shown in Example 1: Tg (°F) | NMP (%) | SBS (psi) | Fully Cured Amide-Imide Polymer As Shown in Example 1: Tg (°F) | NMP (%) | SBS (psi) |
|---|---|---|---|---|---|---|---|
| 1 | 300 | - | - | - | - | - | - |
| 2 | 400 | 482 | 0.39 | $11.3 \times 10^3$ | 486 | 0.29 | $10.9 \times 10^3$ |
| 3 | 430 | 477 | 0.30 | $12.8 \times 10^3$ | 487 | 0.20 | $11.5 \times 10^3$ |
| 4 | 460 | 496 | 0.41 | $13.5 \times 10^3$ | 495 | 0.19 | $12.0 \times 10^3$ |
| 5 | 490 | 496 | 0.41 | $14.4 \times 10^3$ | 507 | 0.26 | $12.8 \times 10^3$ |
| 6 | 500 | 507 | 0.37 | $14.8 \times 10^3$ | 509 | 0.27 | $12.7 \times 10^3$ |
| 7 | 500 | 522 | 0.31 | $13.0 \times 10^3$ | 520 | 0.27 | $12.2 \times 10^3$ |

1. % NMP Fabric-Celion 3000/515-4HS Weave

EXAMPLE 10

We have demonstrated the use of amide-imide as a size on reinforcement fiber for engineering polymers. Chopped carbon fiber with AI size has been successfully processed in injection molding compounds, and continuous carbon fiber with AI size has been successfully woven and processed into fabric reinforced laminates. AI varnish is a good film former and it has good adhesion strength to carbon fiber. (AI, as used herein, means "amide-imide").

Continuous carbon fiber for woven fabric laminates must be sized for the weaving process. Commercial products are most often available with epoxy size materials which are not compatible with AI matric resins.

One commercial product is available with polyimide (PI) size which is also not compatible with AI matrix resin. Both the epoxy and the PI size materials emit volatiles at process temperatures used for AI matrix materials.

Solvent wash and heat cleaning techniques have been developed for removal of epoxy and PI size from woven fabrics, and laminate properties are significantly improved after the size material is removed. Optimum properties, however, have been achieved by purchasing unsized fiber, applying AI size with a dilute AI varnish, weaving the sized fiber into a fabric, and impregnating the resulting fabric with AI matrix resin to form a prepreg for molding.

TABLE 2 AMIDE-IMIDE FABRIC[1] LAMINATE PROPERTIES

TABLE 2

AMIDE-IMIDE FABRIC[1] LAMINATE PROPERTIES

| Panels | No. of Specimens | Room Temperature Flexural Strength psi | Room Temperature Flexural Modulus psi |
|---|---|---|---|
| Sample 1 Unsized | 3 | 93,100 | $7.37 \times 10^6$ |
| Sample 2 Sized with 0.5% Solution of Amide-imide | 2 | 101,600 | $7.86 \times 10^6$ |

| Panels | | 400°F Flexural Strength psi | 400°F Flexural Modulus psi |
|---|---|---|---|
| Sample 1 Unsized | 3 | 75,600 | $7.47 \times 10^6$ |
| Panels Sample 2 Sized with 0.5% Solution of Amide-imide | 2 | 77,400 | $7.90 \times 10^6$ |

1 8-harness satin T-300 fabric, 24 X 24 style

EXAMPLE 11

Continuous Fiber Composite

Woven graphite fabric was purchased from Hexcel Corporation and washed with NMP solvent to remove the commercial epoxy fiber size. The fabric was an 8HS weave with Thornel T 300/309 fiber. One fabric sample was sized by spraying with 0.5% AI solids in a 50/50 blend of methyl ethyl ketone (MEK) and NMP solvents. That sample and a second one without size were hand impregnated with AI 335. After drying, the impregnated fabric was molded into laminates. The test results shown in Table 2 indicate a significant increase in properties as a result of presizing the fabric with dilute AI solution.

Magnamite AS4 high strain carbon fiber strand (12K) was sized with a dilute solution of the amide-imide resin sold commercially as AI 335 to 1% dry resin content. The AI varnish diluted with NMP solvent was observed to wet and coat the carbon fibre very well. After sizing, the strand was impregnated in a heated resin bath with modified AI 335 varnish and drum wound to form unidirectional (U.D.) broadgoods. Handleability of the fibre strand was much improved after sizing. Also, the desired dry resin content of 35% on the U.D. tape was achieved whereas previous attempts to impregnate strand without size had resulted in resin contents ranging from 38 to 48%. Unidirectional laminates were molded from the broadgoods and compression tested. Laminates which were identical, except for the use of unsized fiber, were also tested. The test results shown below clearly demonstrate significant improvement in properties as a result of using an AI fiber size.

| | No. Fiber Size | AI Fiber Size |
|---|---|---|
| Compression Strength, psi | | |
| Room Temperature | $154 \times 10^3$ | $203 \times 10^3$ |
| 200°F test temperature after conditioning in 160°F $H_2O$ for 2 weeks | $104 \times 10^3$ | $143 \times 10^3$ |

Unsized Celion 3000-3K carbon fiber strand was purchased and sized by using a dilute solution of amide-imide polymer powder prepared as shown in Example 1. The sizing solution consisted of NMP solvent and 1% amide-imide polymer solids. After sizing, the fiber was subjected to weaving trials. The fiber proved to have good processability in the weaving process and both 4-harness satin (crowfoot) and 8-harness satin fabrics were fabricated. The fabric was impregnated using hand coating techniques. The impregnation material was dry amide-imide powder prepared as shown in Example 1. After drying, the preimpregnated fabric was molded into laminates for test and evaluation.

Identical laminates were prepared from commercial fabrics with the exception that the commercial material was heat cleaned prior to impregnation to remove the fiber size. A comparison of test results for the two materials is shown below.

| | Heat Cleaned | AI Size |
|---|---|---|
| Short Beam Shear Strength, psi | $9.7 \times 10^3$ | $13.0 \times 10^3$ |
| Flex. Strength, psi | $140.3 \times 10^3$ | $151.6 \times 10^3$ |
| Flex. Modulus, psi | $8.3 \times 10^6$ | $8.5 \times 10^6$ |

Laminates of both types have been tested in compression as supplied and after impacting 4" X 6" panels with a 5/8" radius top at various energy levels. The use of AI fiber size had a dramatic effect on the compressive failure as shown below.

| | Heat Cleaned | AI Size |
|---|---|---|
| Compressive Failure Strain (%) | | |
| Preimpact | | |
| None | 0.61 | 1.07 |
| 1000 in/lb | 0.59 | 0.96 |
| 2000 in/lb | - | 0.83 |

EXAMPLE 12

Woven silicon carbide fabric identified as Dow Corning Nicalon Silicon Carbide 8 Harness Satin was washed in acetone solvent to remove the epoxy size. The fabric was impregnated with a solution of polyamide-imide resin from Example 1. The resin was dissolved in NMP to give a solution with a resin content of 30 weight percent. Both the solution and the fabric were preweighed to yield a 30% dry resin coated fabric after solvent extraction. The fabric was taped to a polyethylene film and the polyamide-imide solution was washed into the fabric with a polypropylene squeegee. The coated fabric was dried in a forced air oven for 4 days at room temperature, 2 hours at 250°F, 1 hour at 300°F, and 1 hour at 400°F to lower the solvent content to about 1.5 wt. %. The fabric was cut to the desired dimensions with successive plies oriented 90° to each other. The plies were tacked together at two corners using a Seelye plastic welder with a tacking tip. The lay-up of four plies was placed in a vacuum bag autoclave to be molded. The vacuum bag autoclave had a 1 hour heatup time at full vacuum, a 15 minute dwell time at 660°F, a 15 minute time at 500 psig and 600°F, and was cooled at 500 psig to 300°F at the maximum rate. The thickness of the laminate ranged from 0.045 to 0.048 inch with the laminate surface fairly uniform with a dark color, slightly semi-glossy and dry looking with fill fiber showing.

EXAMPLE 13

N-methyl-2-pyrrolidone (NMP) is a solvent for polyamide-imide polymer of Example 2 and Trogamid-T an amorphous polyamide. A 27.5 percent solids solution of Trogamid-T in NMP was prepared as follows. The NMP (725 grams) was heated to 180°F, and stirred with a high shear blade mixer with sufficient speed to keep the Trogamid-T pellets from agglomerating when added to the solvent. The Trogamid-T pellets were added to the hot solvent over a 20-minute period. After about 1-1/2 hours mixing, all pellets were dissolved. Mixing was continued for 2 hours after all pellets appeared to be dissolved. The solution was allowed to cool and sit 16 hours before using.

The Trogamid-T solution described above was blended with a polyamide-imide/NMP solution (27.5 percent solids) at a 95:5 weight ratio. The polyamide-imide solution was first heated to 150°F. The Trogamid solution was thus added, and the blend was stirred with a high shear mixer for four hours. The blended solution was allowed to cool and sit 16 hours before using.

The blended solution of polyamide-imide/Trogamid-T was used to coat carbon fiber unidirectional tape. The impregnated unitape was used to form a laminate.

**Claims**

1. A thermally stable fiber having coated on the surface thereof a sizing composition of amide-imide polymer.

2. A coated fibre as claimed in claim 1 wherein the sizing composition is present on said fiber in an amount of from about 0.1 to about 5 percent by weight based on the weight of the fiber.

3. A coated fibre as claimed in claim 1 or claim 2 wherein said amide-imide polymer comprises recurring units selected from the group consisting of (I) A units of:

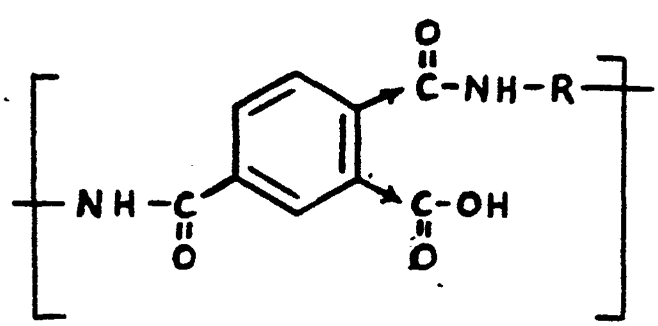

capable of undergoing imidization, wherein → denotes isomerization, and (II) B units of:

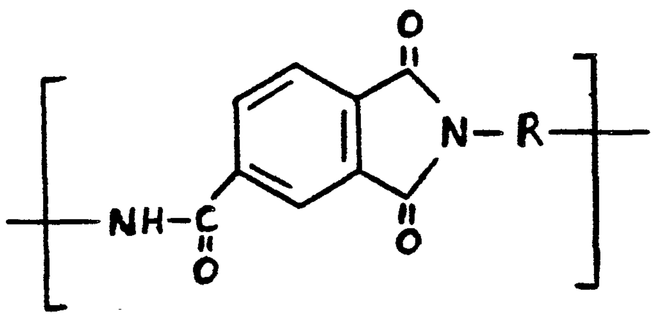

wherein said B units comprise less than about 25 mole percent of the total A and B units in the polymer, and, wherein for both A and B units each R is a divalent, aromatic hydrocarbon radical of from 6 to about 10 carbon atoms, or two divalent aromatic hydrocarbon radicals each of from 6 to about 10 carbon atoms joined directly or by stable linkages selected from the group consisting of -O-, methylene, -CO-, $-SO_2-$, and -S-.

4. A coated fibre as claimed in claim 3 wherein R is

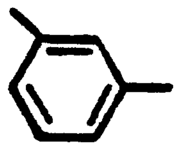

5. A coated fibre as claimed in claim 3 wherein R is a mixture of:

(a) 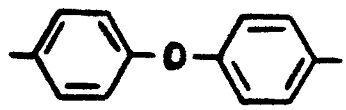

and

(b) 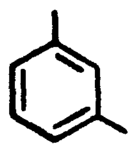

wherein the ratio of (a) to (b) is between about 50 to 50 and about 90 to 10.

6. A coated fibre as claimed in claim 3, claim 4 or claim 5 but wherein said B units comprise more than 60 mole percent of the total A and B units in said polymer.

7. A coated fibre as claimed in claim 1 or claim 2 wherein said amide-imide polymer comprises recurring A units of:

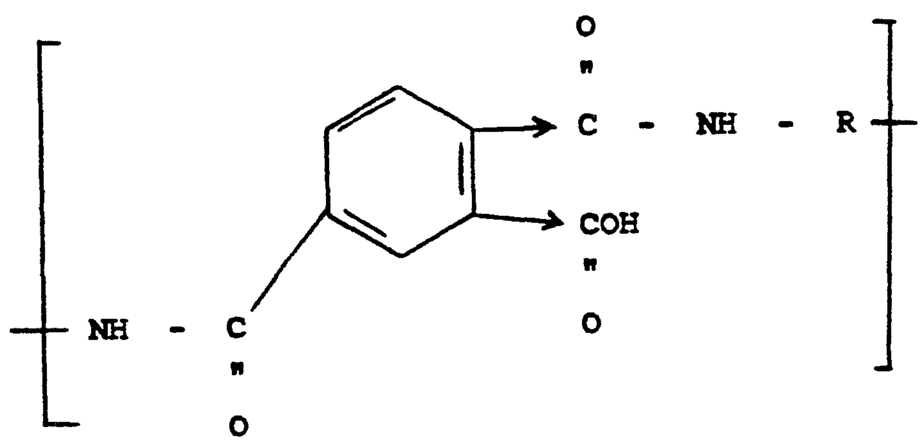

capable of undergoing imidization wherein → denotes isomerization and polyamide C units of:

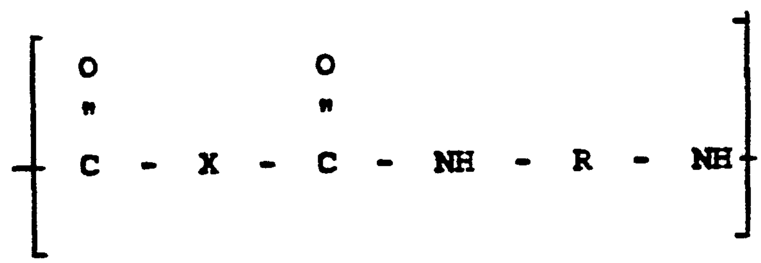

wherein the molar ratio of A units to C units is between about 80 to 20 and about 20 to 80 and each R is a divalent aromatic hydrocarbon radical of from 6 to about 10 carbon atoms or 2 divalent aromatic hydrocarbon radicals of about 6 to about 10 carbon atoms joined directly or by stable linkages selected from the group consisting of -O-, methylene, -CO-, $-SO_2-$ and -S- and X is a divalent aromatic radical.

8. A coated fibre as claimed in claim 7 wherein R and X are each

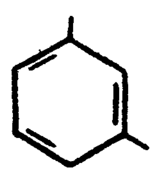

or

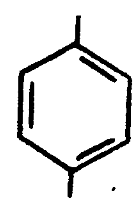

9. A coated fibre as claimed in claim 1 or claim 2 wherein said polymer comprises a mixture of (1) about 10 to about 90 weight percent of a polyamide-imide as claimed in claim 3 and (2) about 90 to about 10 weight percent of a polyamide as claimed in claim 6.

10. A coated fibre as claimed in any one of claims 1 to 9 wherein said fibre is selected from carbon fibre, glass fibre, alumina fibre, steel fibre, silica nitride fibre, silicon carbide fibre, boron fibre, and Kevlar fibre.

11. A method for preparing a coated fibre as claimed in any one of claims 1 to 10 which comprises coating the thermally stable fibre with a solution containing an amide-imide polymer in a solvent and then drying the coated fibre to remove substantially all of the solvent.

12. A method as claimed in claim 11 wherein said amide-imide polymer comprises recurring units selected from the group consisting of (I) A units of:

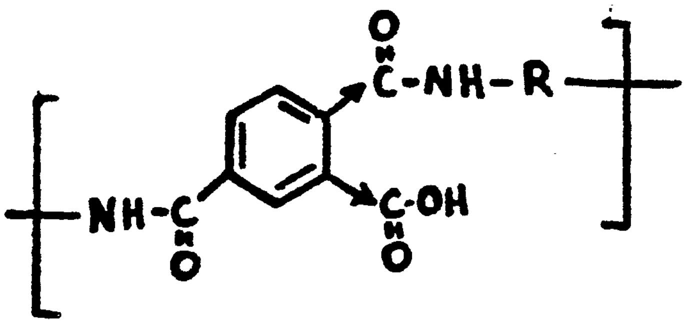

capable of undergoining imidization, wherein → denotes isomerisation and (II) B units of:

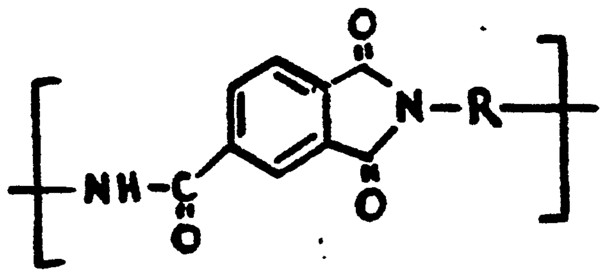

wherein for both A and B units each R is a divalent, aromatic hydrocarbon radical of from 6 to about 10 carbon atoms, or two divalent aromatic hydrocarbon radicals each of from 6 to about 10 carbon atoms joined directly or by stable linkages selected from the group consisting of -O-, methylene, -CO-, $-SO_2-$, and -S-.

13. A method as claimed in claim 11 or claim 12 wherein said solution contains about 0.05 to about 10 percent by weight of said amide-imide polymer.

14. A method for preparing a coated fibre as claimed in claim 1 which comprises contacting a fabric formed from the thermally stable fibre with a solution containing an amide-imide polymer in a solvent and then drying the coated fabric to remove substantially all of the solvent.

15. A coated fibre as claimed in any one of claims 1 to 10, or when obtained by the method claimed in any one of claims 11 to 13, woven into a fabric.